(19) Europäisches Patentamt
European Patent Office
Office européen des brevets

(11) **EP 3 903 230 B1**

(12) **FASCICULE DE BREVET EUROPEEN**

(45) Date de publication et mention de la délivrance du brevet:
**07.02.2024  Bulletin 2024/06**

(21) Numéro de dépôt: **19829180.9**

(22) Date de dépôt: **19.12.2019**

(51) Classification Internationale des Brevets (IPC):
**G06F 18/213** *(2023.01)*    **G06F 18/22** *(2023.01)*
**G06V 10/46** *(2022.01)*    **G06V 10/50** *(2022.01)*
**G06V 10/74** *(2022.01)*    **G06V 10/77** *(2022.01)*
**G06V 30/19** *(2022.01)*    **G06V 30/424** *(2022.01)*

(52) Classification Coopérative des Brevets (CPC):
**G06V 10/50; G06F 18/213; G06F 18/22;**
**G06V 10/462; G06V 10/761; G06V 10/7715;**
**G06V 30/19127; G06V 30/424;** G06V 2201/06

(86) Numéro de dépôt international:
**PCT/EP2019/086413**

(87) Numéro de publication internationale:
**WO 2020/136091 (02.07.2020 Gazette 2020/27)**

(54) **APPARIEMENT STRUCTUREL D'IMAGES PAR HACHAGE DE DESCRIPTEURS DE SINGULARITÉS DU GRADIENT**

STRUKTURELLER BILDABGLEICH DURCH HASHING VON DESKRIPTOREN VON SINGULARITÄTEN DES GRADIENTEN

STRUCTURAL IMAGE MATCHING BY HASHING DESCRIPTORS OF SINGULARITIES OF THE GRADIENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.12.2018   FR 1874212**

(43) Date de publication de la demande:
**03.11.2021   Bulletin 2021/44**

(73) Titulaire: **Solystic**
**92220 Bagneux (FR)**

(72) Inventeur: **DESPREZ, Olivier**
**78000 Versailles (FR)**

(74) Mandataire: **IP Trust**
**2, rue de Clichy**
**75009 Paris (FR)**

(56) Documents cités:
**WO-A1-2016/203149**

- **CHANDRASEKHAR V ET AL: "CHoG: Compressed histogram of gradients A low bit-rate feature descriptor", 2009 IEEE CONFERENCE ON COMPUTER VISION AND PATTERN RECOGNITION : CVPR 2009 ; MIAMI [BEACH], FLORIDA, USA, 20 - 25 JUNE 2009, IEEE, PISCATAWAY, NJ, 20 juin 2009 (2009-06-20), pages 2504-2511, XP031607260, ISBN: 978-1-4244-3992-8**
- **Jingdong Wang ET AL: "Hashing for Similarity Search: A Survey", , 13 août 2014 (2014-08-13), XP055571085, Extrait de l'Internet: URL:https://arxiv.org/pdf/1408.2927.pdf [extrait le 2019-11-06]**

**Description**

Domaine technique

Le domaine de l'invention est celui du traitement d'images numériques d'articles avec pour but d'apparier deux images numériques d'un même article, et en particulier deux images numériques d'un même objet postal comme une lettre, un colis ou un paquet de type par exemple "Petit Paquet Import" ou "PPI", dans une machine de traitement logistique des objets postaux comme le tri postal pour préparer la distribution postale chez les destinataires des objets postaux.

Technique antérieure

Afin de recevoir des objets postaux en provenance de diverses sources d'approvisionnement et les distribuer vers un grand nombre de destinataires, les centres de tri sont équipés de systèmes automatisés de tri postal.

L'automatisation des centres de tri postal requiert un suivi automatisé des colis afin de vérifier leur bon acheminement au sein de ces centres.

Certaines méthodes de suivi reposent sur une identification des objets postaux par signature d'image ce qui évite d'utiliser un marquage comme un code barre apposé sur les objets postaux.

En général, un objet postal entrant dans une machine de tri passe devant un dispositif de prise d'image numérique. L'image numérique de l'objet peut être traitée dans une unité de traitement de données pour dériver une signature d'image qui peut servir d'identifiant unique pour la distribution postale de cet objet postal.

Plusieurs dispositifs de prise d'images peuvent être installés le long du parcours des objets postaux dans les machines de tri. Par ailleurs, le même objet peut passer plusieurs fois en entrée de la même machine si le tri machine est un tri multi-passes par exemple.

L'unité de traitement de données doit être agencée pour apparier deux images différentes d'un même article qui ont été acquises à deux instants différents.

La méthode d'appariement repose sur la base de critères de similarité graphique et l'invention concerne donc plus particulièrement un procédé pour apparier des images numériques d'un même article dans une unité de traitement de données d'une machine de traitement des articles, dans lequel chaque image numérique d'un article comprend au moins une zone d'information contenant des symboles et des caractères d'écriture, le procédé comprenant les étapes suivantes de traitement de données

- transformation de chaque image numérique d'un article en une carte topographique de divergence locale du champ vectoriel de gradient de luminance,
- détection, à partir de ladite carte topographique, de singularités ou extrema de divergence locale du champ vectoriel de gradient de luminance, ces singularités correspondant à des points d'intérêt dans ladite image numérique,
- et pour point d'intérêt détecté, encodage des valeurs de la singularité correspondante localisées sur un anneau centré sur le point d'intérêt dans la carte topographique pour dériver un descripteur de singularité du champ de gradient associé audit point d'intérêt,
- et comparaison desdits descripteurs de singularité de deux images numériques pour évaluer une similarité graphique entre ces deux images.

Un tel procédé est décrit dans le brevet français FR 3 037 691. Dans ce procédé connu, les descripteurs de singularité du champ de gradient sont désignés sous le terme "DoGS" pour "Descriptors of Gradient Singularities".

Comme les descripteurs DoGS à la base de ce procédé, sont des descripteurs d'image « bas niveau » (codage de la force et orientation des transitions pixelliques), ils constituent un attribut d'appariement d'images particulièrement robuste et générique car peu sensible par construction à la variabilité des informations non symboliques apposées sur l'article, ici en l'occurrence pour un objet postal : reflets, ombrages, déformations de l'objet ou de sa surface, fond d'image, glissement du contenu sous enveloppe en plastique, etc.

Ainsi les points d'intérêt (POI) décrits par les DoGS sont prioritairement extraits au niveau des zones d'informations symboliques à fort gradient local, régions contenant les informations textuelles et graphiques fortement robustes d'une passe d'acquisition d'image à une autre, dont la région discriminante de l'adresse postale de destinataire.

Pour garantir la reproductibilité et la localisation des POI sur l'image, ils sont précisément extraits au niveau des extrema de divergence du champ vectoriel de gradient local. Les POI apparaissent ainsi à l'extrémité des lettres telles que par exemple la lettre "t" ou "p", sur le point de la lettre "i" ou encore dans le rond de la lettre "o".

Ce procédé connu d'appariement a prouvé ses capacités à optimiser les performances d'un procédé d'identification virtuelle d'article par signature d'images connu sous la marque "V-Id™" de la société "SOLYSTIC" (ré-identification d'objets postaux par signature d'image) qui est divulgué dans le brevet européen EP1866105B1, en réduisant notamment les rejets et erreurs sur la population problématique résiduelle des objets postaux plats présentant des régions d'intérêt (ROI) difficiles à détecter ou une variabilité physique intrinsèque (emballages plastiques, inserts papier sous couverture, glissement sous fenêtre, plis ouverts, ...).

La technologie "DoGS" a également favorisé l'ouverture des champs d'application des procédés de "matching" au traitement logistique des objets encombrants, à des services non mécanisés d'aide au tri casier de type Solystic connu sous la marque "CAMS™", ou à la reconnaissance d'articles postaux normalisés (formulaires, timbres, logos, etc.), cas d'applications postales qui nécessitent de s'affranchir au maximum de l'origine et des conditions de capture des images traitées et qui demandent de traiter des problèmes de variabilité inter-passe moins contraints et maîtrisés que dans le cas du tri des objets postaux plats.

Le principe à la base du procédé d'appariement DoGS est fondé sur la mise en correspondance de points d'intérêt POI entre couples d'images puis distinction statistique entre POI de fond (communs aux images issues d'une même trame graphique) et POI discriminants (signant les individualités) au sein d'un contexte de recherche donné.

Ceci induit une forte propension de ce procédé DoGS à segmenter automatiquement les caractéristiques structurelles textuelles et graphiques d'un ensemble d'articles.

Cette propriété est précieuse car utile à la résolution de nombre de problématiques postales : clustérisation/partitionnement d'objets, classification spectrale de flux, filtrage adaptatif d'individus en contexte, etc. Cette double capacité de sélection structurelle et d'individualisation dans la famille structurelle est également cruciale dans l'optique d'un passage à l'échelle de la fonction d'identification avec appariement d'objets postaux sur bases d'images massives (approches de type Big Data Image), voire simplement dans les cas où le contexte maximal de "matching" est large et ne peut être réduit, ni par prédiction de séquence des objets recyclés (pas de contiguïté supposée entre eux) ni par identification du contenant des objets. Cette situation est quasi systématique lors de la ré-identification des petits paquets import appelés "PPI" ou plus généralement des objets encombrants (colis et paquets).

Néanmoins si le temps d'extraction des POI et des DoGS d'une image peut être maîtrisé sur des processeurs graphiques pour entrer dans les contraintes d'exploitation opérationnelles (<100ms), malgré l'optimisation spatiale de la recherche des POI par approximation de la transformation rigide entre deux images comparées, le temps d'appariement DoGS d'une image dans un contexte reste lui dépendant du nombre d'images et du nombre de POI mis en correspondance dans le contexte.

C'est pourquoi les fonctions de traitement d'images s'appuyant sur la technologie DoGS (recyclage des rejets OCR d'objets plats, e-matching pour l'aide au tri manuel "CAMS™", détection du ROI pour OCR, ...) sont aujourd'hui dimensionnées sur des tailles de contextes de recherche qui garantissent les contraintes temps-réel.

Par conséquent, le temps d'appariement des images à l'aide de ces descripteurs DoGS dépend du nombre points d'intérêts considérés ainsi que du nombre d'images de référence à balayer pour détecter une ressemblance avec l'image cible et en conséquence, le procédé décrit ci-dessus de l'état de la technique ne peut pas répondre à des contraintes d'exploitation temps-réel fortes avec un très grand nombre d'images de référence et de ce fait il est exploité actuellement que sur un nombre d'images de référence limité afin de garantir les contraintes d'exploitation temps-réel, ce qui limite le champ d'application du procédé à du tri du courrier.

Exposé de l'invention

L'invention a pour objet de résoudre le problème d'appariement en temps réel d'une image cible avec des images de références dans une base de données massive, c'est-à-dire comprenant un très grand nombre d'images de références pour étendre son application notamment à du tri postal de colis, de paquets de type PPI ou d'objets plats sans identification de contenants.

A cet effet, l'invention a pour objet un procédé selon la revendication 1.

Le procédé d'appariement selon l'invention repose ainsi sur une approximation de la corrélation des descripteurs de singularités du champ de gradient à comparer au moyen d'une technique de hachage dite LSH Cosinus, pour Locality Sensitive Hashing Cosinus.

L'utilisation d'une telle approximation réduit considérablement les temps de calcul nécessaires aux appariements d'images et produit des résultats suffisamment fiables en terme d'occurrences de faux positifs et de faux négatifs pour que le procédé d'appariement soit utilisé en conditions d'exploitation temps-réel avec des bases de données massives d'images de référence d'articles comme des colis ou paquets postaux.

La présence de symboles et caractères d'écriture, par exemple dans une adresse de destination des colis, sur les images et la capacité du procédé d'appariement à les exploiter permet de discriminer efficacement deux colis ou deux courriers par ailleurs d'apparence similaire mais ayant des adresses postales de distribution différentes, sans pour autant nécessiter des opérations lentes car lourdes en calcul comme des procédés de détection de la région d'intérêt (ROI) et des procédés de reconnaissance de caractères ou de l'analyse sémantique des lignes de l'adresse postale de distribution.

Le procédé selon l'invention dénommé ci-après "Fast DoGS" tire profit avantageusement de l'approximation de la mesure de comparaison des descripteurs des POI par des hachages sensibles à la similarité DoGS.

Le procédé Fast-DoGS permet de déporter la complexité calculatoire en amont du processus d'appariement en phase d'extraction des signatures d'images, par apprentissage des liens structurels entre les images de la base qui forment le contexte maximal.

Ces liens structurels sont caractérisés par les collisions de "hashes" des DoGS décrivant les POI des différentes images sur plusieurs tables de hachage. Ainsi par principe deux images sont d'autant plus similaires qu'un grand nombre de leurs POI tombent dans des « buckets » identiques d'une même table de hachage (c'est-à-dire ont des mêmes valeurs de "hash").

Le procédé Fast-DoGS permet au final de générer en temps-réel pour une image cible des hypothèses de reconnaissance d'image. Le critère de décision pour l'ordonnancement des hypothèses peut porter sur l'ensemble des POI sélectionnés de l'image requête ou sur les seuls POI considérés comme discriminants sur l'ensemble des images de références considérées, avec ou sans pré-filtrage préalable des images de la même famille structurelle.

Les hypothèses générées pouvant être scorées en fonction du nombre de collisions statistiques des POI avec l'image cible, il est toujours possible suivant l'applicatif d'identification virtuelle et l'homogénéité structurelle du flux d'objets en base d'affiner la décision sur un contexte réduit des N meilleurs candidats (par appariement DoGS spatial ou autre).

Il est à noter que le procédé Fast-DoGS selon l'invention est aussi particulièrement adapté à la résolution du problème de l'appariement des images d'objets encombrants acquis en multi-faces puisque l'analyse statistique des collisions des POI extraits sur l'ensemble des images d'un même objet, sans contrainte spatiale, s'affranchit complètement d'une phase préliminaire d'association des faces.

Le procédé Fast-DoGS selon l'invention contribue à apporter de nouvelles solutions notamment aux applicatifs d'identification virtuelle d'objets postaux "v-Id™" et de ré-identification en machine des objets plats par l'image, dans lesquels le problème des grands horizons n'est pas résolu, le contexte maximal de recherche étant actuellement limité à l'ensemble des bacs chargés pour une session de tri avec d'éventuels résidus non purgés.

Pour un fonctionnement temps-réel optimal, les requêtes d'appariement nécessitaient jusqu'à présent une réduction de ce contexte de recherche maximal par utilisation de filtres physiques du flux (scanning d'identifiants de bacs ou détection d'intercalaires). Cela constituait une contrainte d'exploitation pour le client qui pénalisait les solutions d'identification virtuelle et compliquait fortement l'analyse et l'interprétation des performances système du procédé.

Pour ce qui est traitement des paquets "PPI" ou celui des objets encombrants (paquets/colis), les codes à barres discriminants forment un premier tamis naturel mais insuffisant, la structure graphique et textuelle de l'information en constitue un second qui peut en outre permettre d'exhiber les zones d'intérêt pour l'appariement.

Concernant les périphériques logiciels machine qui nécessitent une fonction de classification graphique ou structurelle des articles, en général ils ne travaillent pas sur un dictionnaire massif et complet de l'ensemble des classes d'objets mises à jour mais utilisent les dictionnaires des N derniers modèles rencontrés au dépilage. Le filtrage structurel reste ainsi tributaire de l'homogénéité du flux d'objets dépilés. Le procédé Fast-DoGS selon l'invention va permettre de lever les contraintes ci-dessus.

Le procédé d'appariement d'images selon l'invention peut présenter les particularités suivantes.

- ladite transformation du vecteur de données comprend une multiplication du vecteur de données par une matrice de hachage représentant les familles de fonctions de hachage de type LSH Cosinus pour produire un second vecteur de données numériques à composantes signées positives ou négatives, une transformation de chaque composante du second vecteur de données numériques (210) en une valeur binaire pour produire un troisième vecteur de valeurs binaires et un calcul d'une valeur numérique de clef de hachage qui correspond à une conversion de l'expression binaire représentée par le troisième vecteur.

- les articles sont des objets postaux sur chacun desquels est apposée une information d'adresse postale de distribution comprenant des symboles et des caractères d'écriture, les anneaux concentriques centrés sur le point d'intérêt étant inscrits dans un disque de singularité de 8mm de rayon pour une résolution d'image de 4 pixels/mm et le vecteur de données numériques associées aux anneaux centrés sur le point d'intérêt étant un vecteur à 32 composantes pour 32 anneaux.

- chaque fonction formant une famille de hachage peut être un vecteur de données à 32 composantes choisies chacune aléatoirement et indépendamment parmi les valeurs +1 et -1.

- chaque famille de hachage peut être une matrice de hachage formée par la concaténation de K fonctions de hachage représentée chacune par un vecteur de données.

- Suivant l'hétérogénéité du spectre d'objets postaux traités, K peut être choisi entre 16 et 64 et est de préférence égal à 32, pour assurer une bonne précision des appariements POI (peu de faux positifs).

- on peut calculer L clefs numériques de hachage pour le descripteur de singularités à partir de L familles de fonctions de hachage avec L choisi entre 4 et 8 pour assurer un bon rappel des appariements POI (peu de faux négatifs).

L'invention s'étend à un procédé pour trier des objets postaux tels que du courrier, des colis ou des paquets, qui utilise le procédé d'appariement indiqué ci-dessus pour apparier une image cible d'un certain objet postal à une parmi N images candidates associées à N objets postaux en utilisant un hachage des DoGS de type LSH Cosinus.

Dans ce procédé de tri, on peut encore avantageusement calculer une matrice de collision des points d'intérêt à partir de tables de hachage.

Dans ce procédé de tri, on peut encore avantageusement réaliser un filtrage structurel de l'horizon de recherche, constitué par les images candidates, à partir de ladite matrice de collision.

Dans ce procédé de tri, on peut encore avantageusement réaliser une clusterisation/partitionnement structurelle de l'horizon de recherche, à partir de la matrice de collision.

Dans ce procédé de tri, on peut encore avantageusement réaliser de la génération d'hypothèses de reconnaissance d'images à partir des tables de hachage.

L'invention s'étend encore avantageusement à une machine de tri postal avec une unité de contrôle/commande spécialement agencée pour mettre en oeuvre le procédé de traitement d'images selon l'invention.

Description sommaire des dessins

La présente invention sera mieux comprise et d'autres avantages apparaîtront à la lecture de la description détaillée du mode de réalisation pris à titre d'exemple nullement limitatif et illustré par les dessins annexés, dans lesquels :

- la figure 1A illustre schématiquement une opération de suivi d'un colis dans un centre de tri ;
- la figure 1B illustre l'obtention d'un vecteur de données numériques représentatif du descripteur local d'une image numérique ;
- la figure 2A illustre l'obtention de la valeur de hachage d'un descripteur local ;
- la figure 2B est une illustration du principe du hachage selon une fonction LSH Cosinus ;
- la figure 3A représente une table de hachage de rangement des empreintes numériques ;
- la figure 3B représente l'ensemble des opérations nécessaires à l'appariement de deux images selon le procédé de l'invention ; et
- La figure 4 illustre un exemple de contexte d'objets postaux pour calculer une matrice de collision.

Description d'un mode de mise en oeuvre du procédé selon l'invention

Le procédé Fast-DoGS repose donc sur une approximation d'une mesure de corrélation de descripteurs locaux de points d'intérêts POI (Point Of Interest) d'images à comparer entre eux.

Les descripteurs locaux étant des signaux DoGS centrés-réduits, la corrélation entre les DoGS équivaut à calculer une similarité cosinus de cette approximation et peut donc être réalisée selon l'invention au moyen d'une technique de hachage dite LSH Cosinus (Locality Sensitive Hashing Cosinus).

Cette approximation est réalisée selon l'invention au moyen d'une technique de hachage dite LSH Cosinus (Locality Sensitive Hashing Cosinus) appliquée à des indices de singularités du champ de gradient au voisinage du point d'intérêt et en particulier sur des anneaux concentriques et centrés sur le point d'intérêt dans la mesure où les images comprennent des symboles et caractères d'écriture.

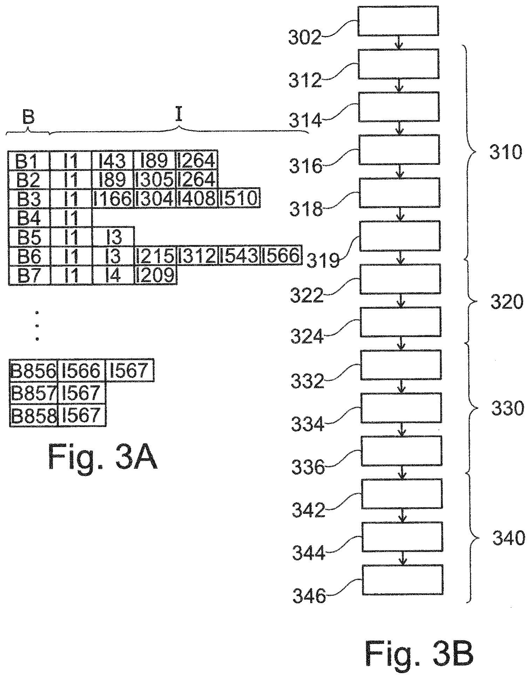

Le procédé d'appariement selon l'invention comprend la mise en oeuvre de plusieurs étapes illustrées sur la figure 3B, à savoir :

i) détermination en 310 de descripteurs locaux caractérisant les images numériques, ces descripteurs locaux étant des signaux DoGS dans le cadre du procédé Fast-DoGS,
ii) définition en 320 de familles de fonctions de hachage LSH Cosinus à appliquer aux signaux DoGS des images numériques,
iii) calcul en 330 de valeurs de hachage par application d'une famille de fonctions de hachage LSH Cosinus aux signaux DoGS, et
iv) en 340 appariement d'images numériques au moyen de la génération de tables de hachage LSH DoGS.

A noter que dans un processus de tri d'objet en plusieurs passes de tri, les étapes de génération des tables de hachage sont réalisées dans une première passe de tri tandis que l'étape iv d'appariement d'images s'effectue dans une passe de tri ultérieure. Il est toutefois possible de générer à la volée les tables de hachage et de réaliser l'appariement sans sortir du cadre de l'invention.

Sur la gauche de la figure 3B, on a illustré le détail des opérations de traitement numériques dans ces quatre étapes principales, une étape préliminaire étant constituée par l'acquisition en 302 des images numériques à l'aide d'un dispositif de prise d'images.

Détermination de descripteurs DoGS de singularités du champ vectoriel de gradient de luminance

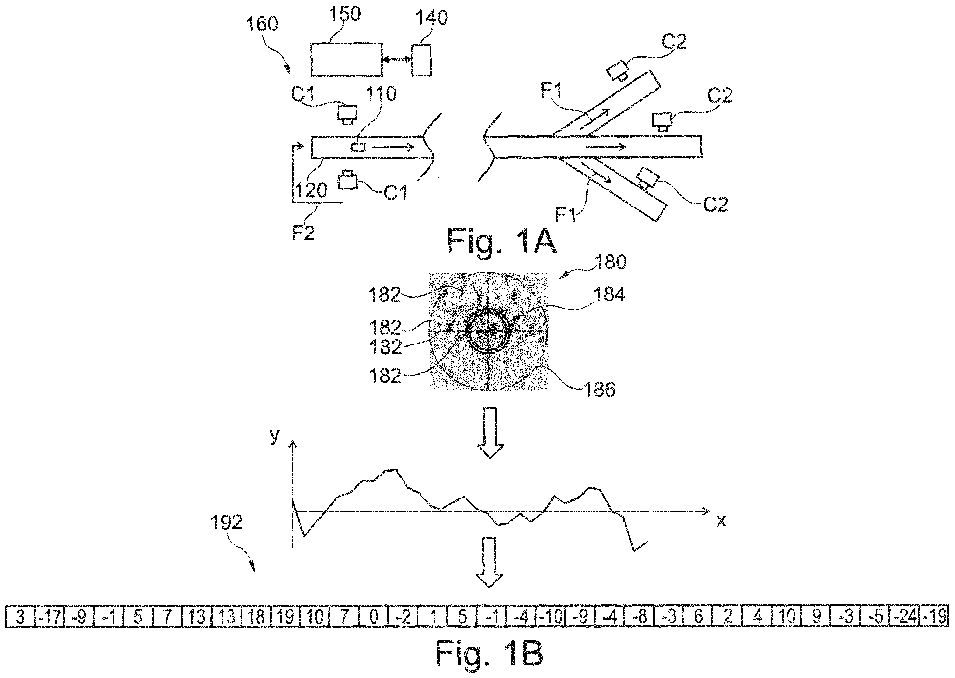

Afin de déterminer les signaux DoGS qui sont les descripteurs locaux d'une image numérique d'un article selon l'invention, on commence par extraire en 312 une carte numérique du champ vectoriel de gradient de luminance de cette image par régression planaire locale sur, par exemple, des portions d'images de 5 pixels de côté, puis on calcule en 314 l'image des singularités de cette image numérique dont une portion 180 est représentée en figure 1B, par combinaison de critères locaux de circularité, divergence, et/ou gradient, chaque pixel de l'image de singularité étant associé à un indice ou valeur de singularité signée donnant son niveau de gris. Cette image des singularités peut être vue comme une sorte de carte topographique numérique qui fait apparaître des courbes de niveaux de la divergence locale du champ de gradient avec des sommets et des creux qui sont les singularités.

On détecte alors en 316 les extrema locaux ou singularités topologiques 182 de l'image des singularités illustrée figure 1B, ces extrema locaux 182 définissant les points d'intérêts POI (Point Of Interest) dans l'image numérique et dans l'image des singularités.

Le voisinage local de chaque POI est ensuite décrit au moyen d'un signal DoGS 190, qui est représenté selon l'invention par un vecteur de données 192 dont on calcule en 318 chaque composante en effectuant la somme des indices de singularité des points compris sur un anneau 184 de largeur de un pixel centré sur le POI considéré, l'ensemble des anneaux formant un disque de singularité 186 d'un rayon donné centré sur le POI.

Sur la figure 1B, l'axe X des abscisses représente une distance en pixel au POI considéré et l'axe Y des ordonnées représente l'amplitude des composantes du signal DoGS 190.

Ces sommes sont signées, c'est-à-dire qu'elles peuvent prendre des valeurs positives (zones de convergence du champ vectoriel du gradient local) aussi bien que des valeurs négatives (zones de divergence du champ vectoriel du gradient local), en fonction des valeurs de singularités associées aux pixels de l'image de singularité.

A l'issue de la détermination des signaux DoGS de chacun des POI d'une image numérique, on stocke en mémoire de l'unité de traitement de données en 319 cette image numérique en association à l'ensemble des signaux DoGS qui sont issus de cette image.

Dans le cas d'articles à trier de type objet postal censés porter un bloc d'adresse de distribution avec des lignes d'adresse formées de symboles et de caractères d'écriture manuscrits ou dactylographiés, ce bloc d'adresse de distribution peut servir de région discriminante des articles et des images de ces derniers. Selon l'invention, on a déterminé qu'un rayon adapté pour le disque de singularité est 8 mm, avec une résolution d'image de 4 pixels/mm qui est suffisante pour détacher des caractères d'écriture dans l'image.

En conséquence les signaux DoGS sont dans ce mode de réalisation constitués de vecteurs de données de 32 composantes, chaque composante correspondant à une somme des singularités situés sur un anneau d'un pixel de large centré sur le POI, les rayons des anneaux s'incrémentant successivement pour prendre des valeurs allant de 1 à 32 pixels, avec un anneau par rayon.

Il est entendu qu'un pixel de centre géométrique compris dans l'un des anneaux sera considéré comme en faisant partie.

La figure 1B illustre un vecteur de données 192 représentatif du signal DoGS 190 dérivé d'une portion 180 d'une image de singularités, elle-même dérivée d'une image numérique, non représentée, capturée par un appareil de prise de vue numérique.

Plus particulièrement, si on considère que le disque de singularité du gradient au voisinage de ce POI (figure 3) a taille adaptée de 8mm (rayon de description R = 32 pixels sur image de résolution 4pix/mm) et en considérant un critère de recouvrement moyen de trois lignes d'adresses destinataires dactylographiées, lesquelles lignes d'adresse constituent généralement la région discriminante, la mesure de similarité utilisée pour comparer deux signaux DoGS $(d_2, d_1)$ décrivant deux POI $(p_2, p_1)$ est le coefficient de corrélation normalisé $\rho \in [-1, +1]$.

$$\rho(p_2, p_1) = \frac{COV(d_2, d_1)}{\sigma_{d2} \sigma_{d1}}$$

$$= \frac{\frac{1}{R} \sum_R ((d_2 - \overline{d_2})(d_1 - \overline{d_1}))}{\sqrt{\frac{1}{R} \sum_R ((d_1 - \overline{d_1})(d_1 - \overline{d_1}))} \sqrt{\frac{1}{R} \sum_R ((d_1 - \overline{d_1})(d_1 - \overline{d_1}))}}$$

Ces signaux étant centrés et réduits par construction après extraction des POI sur l'image, mesurer une corrélation entre deux DoGS revient à calculer le produit scalaire entre deux vecteurs de 32 composantes codées sur 8 bits (les valeurs entières signées d'un DoGS sont d'amplitudes très inférieures à 128 après application d'un facteur de précision réelle $\times 10$).

$$sim(p_2, p_1) = \rho = \frac{\sum_R d_2 d_1}{\sqrt{\sum_R d_2^2}\sqrt{\sum_R d_1^2}} = \frac{d_2 . d_1}{\|d_2\|\|d_1\|} = \cos\theta$$

La mesure de similarité entre signaux DoGS centrés-réduits revient donc à celle dite de la « similarité du cosinus » formée par les vecteurs DoGS sur IR$^{32}$ comme illustré ci-dessus.

Définition de familles de fonctions de hachage

Par la suite, deux images seront considérées comme similaires ou non sur la base d'une approximation d'une mesure de similarité des descripteurs locaux associés respectivement à ces deux images, c'est-à-dire sur la base d'une mesure de similarité des signaux DoGS respectifs.

Comme indiqué précédemment, une mesure de similarité des signaux DoGS caractérisant les POI est le coefficient de corrélation normalisé entre ces deux signaux.

Ces signaux étant centrés et réduits par construction après détermination de POI de l'image, mesurer une corrélation entre deux signaux DoGS revient à calculer le produit scalaire entre les deux vecteurs les représentant respectivement.

La mesure de similarité entre signaux DoGS centrés-réduits revient donc à celle dite de la « similarité du cosinus », et une telle mesure de similarité peut être approximée avantageusement au moyen de la méthode du "Locality Sensitive Hashing Cosinus" ou LSH Cosinus dans laquelle des valeurs numériques de hachage chacune représentative d'un signal DoGS sont calculées.

Ainsi, l'invention tire partie que deux signaux DoGS identiques ou similaires l'un à l'autre auront une forte probabilité d'avoir une même valeur numérique de hachage.

Dans ce mode de mise en oeuvre de l'invention, L valeurs de hachage différentes sont calculées pour chaque signal DoGS en hachant le vecteur le représentant au moyen de L familles de fonctions de hachage différentes, chaque famille étant représentée comme une matrice 202 de hachage formée par la concaténation de K fonctions de hachage qui sont elles-mêmes chacune représentée par un vecteur de données 204 de même nombre de composantes que les signaux DoGS, soit 32 composantes dans le présent mode de réalisation.

Chacune des fonctions formant les L familles de fonctions de hachage est construite par assignation aléatoire indépendante d'une valeur +1 ou -1 aux 32 composantes des vecteurs les représentant.

Comme décrit par la suite, l'approximation de la mesure de similarité entre deux signaux DoGS, et donc la recherche de similarité entre deux images, est basée sur des comparaisons entre ces valeurs de hachage.

On comprendra qu'augmenter la valeur de K, avec K > 1, augmente la précision en augmentant la finesse du hachage, et réduit le nombre de faux positifs, c'est-à-dire l'appariement de DoGS non similaires augmentant le risque d'appariement erroné de deux images.

Selon l'invention, avantageusement K peut être compris entre 16 et 64, bornes incluses, et vaut de préférence 32, comme dans le présent mode de réalisation.

On comprendra aussi qu'augmenter la valeur de L, avec L > 1, augmente le rappel, c'est-à-dire réduit le nombre de faux négatifs en augmentant le nombre de valeurs de hachage pour un même signal DoGS, et donc la probabilité qu'au moins l'une de ces valeurs de hachage permette de trouver une similarité entre deux signaux DoGS et donc, in fine, de favoriser le bon appariement de deux images.

Selon l'invention, L peut être avantageusement compris entre 4 et 8, bornes incluses, dans le présent mode de réalisation.

Les familles de fonction de hachage peuvent être préparées à l'avance et être appliquées à tout nouvel ensemble de nouvelles images ou à toute nouvelle image courante.

Calculs des valeurs de hachage

Pour obtenir les valeurs de hachage numériques des signaux DoGS, on hache en 332 les vecteurs de données 192 représentatifs des signaux DoGS au moyen des matrices 202 représentant les familles de fonctions de hachage par multiplication des vecteurs par les matrices.

Chaque produit scalaire d'un vecteur signal DoGS par une colonne 204 d'une matrice de hachage résulte en une valeur numérique signée 212.

Cette valeur numérique signée traduit l'orientation du vecteur signal DoGS par rapport à l'hyperplan défini par la fonction de hachage représentée par la colonne considérée.

Ainsi, le produit d'un vecteur signal DoGS et de l'ensemble des colonnes d'une matrice de hachage résulte en un vecteur de données 210 de même nombre de composantes qu'il y a de colonnes dans la matrice vecteur signal DoGS, soit K = 32 dans ce mode de réalisation, les composantes ayant des valeurs numériques signées, positives ou négatives.

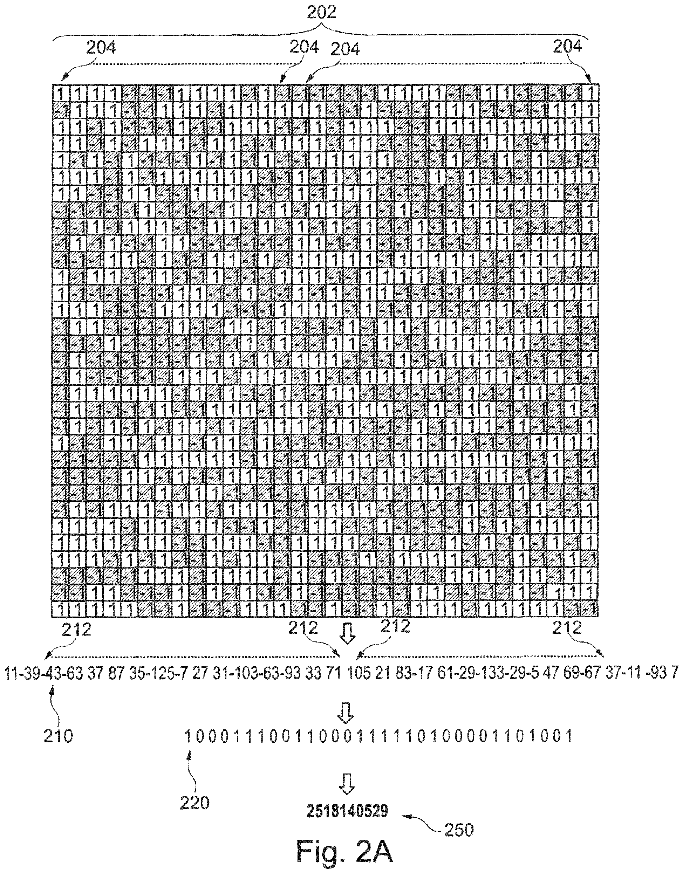

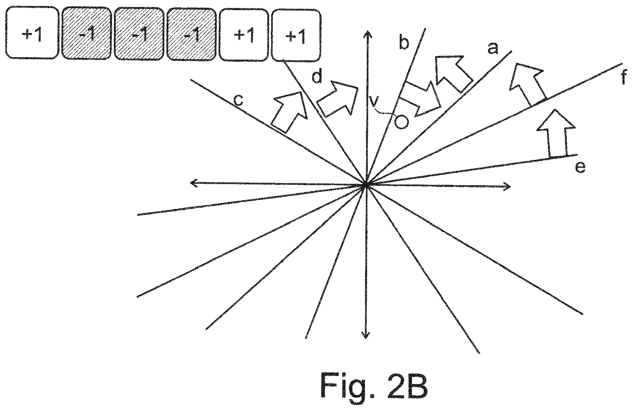

Dans un deuxième temps, on obtient la clef de hachage 250 (qui est une valeur ou empreinte numérique) du signal DoGS en assignant à chaque composante dudit vecteur de données 210 l'une des deux valeurs binaires 0 et 1 selon son signe, par exemple en assignant la valeur 0 aux composantes négatives et la valeur 1 aux composantes positives, comme illustré par le vecteur de données 220 à composantes binaires de la figure 2, puis en calculant la valeur numérique exprimée sur 32 bits représentée par la séquence de ces 32 valeurs binaires, cette valeur numérique représentant la valeur numérique du signal DoGS et donc de la clef de hachage.

La figure 2B donne une illustration graphique de ce processus de calcul dans le cas d'un espace bidimensionnel partagé en demi plans par chacune des droites a à f correspondant à des fonction de hachage : selon la position du point V représentant un vecteur signal DoGS, au-dessus ou au-dessous de chaque droite, on assigne une valeur positive ou négative aux composantes de la clef de hachage, prises dans l'ordre de considération des fonction de hachage, de a à f dans l'illustration de la figure 2B.

### Appariement d'images numériques

Au moyen des opérations décrites ci-dessus, on a associé chaque POI d'une collection d'images à une clef de hachage caractéristique de l'environnement local de ce POI.

Les valeurs de hachage des descripteurs des POI sont rangées en 242 dans des buckets d'une base de données en mémoire dans l'unité de traitement en fonction de leurs valeurs, chaque bucket accueillant une ou plusieurs images I.

Une comparaison entre les différents vecteurs DoGS (chacun associé à un POI) est ainsi automatiquement réalisée : deux signaux DoGS sont considérés comme similaires s'ils tombent dans un même bucket.

Avantageusement selon l'invention, on construit en 244 L tables de hachage 350, une pour chaque famille de fonctions de hachage, par association de chaque bucket B aux images I dont les POI sont associés à une valeur numérique de hachage rangée dans le bucket considéré à la suite du hachage produit par la famille respective.

La figure 3A illustre un exemple de table de hachage 350 qui comprend des buckets B numérotés de 1 à 858, chacun associé à des images I numérotées de 1 à 567 ayant des valeurs de hachage rangées dans ces buckets.

On apparie en 246 une image cible à une image de référence sur la base du nombre de leurs signaux DoGS considérés comme similaires, ce qui revient au nombre de POI dont les empreintes numériques sont rangées dans de même buckets, c'est-à-dire sur la base du nombre de POI dont l'environnement local aura été évalué comme similaire entre les deux images par le calcul d'approximation de similarité Fast-DoGS.

Plus l'image cible et l'image de référence auront en commun un nombre élevé de valeurs de hachage, plus ces deux images seront considérées comme similaires et pourront être appariées si le niveau de similarité est jugé suffisant par le praticien mettant en oeuvre le procédé d'appariement.

En d'autres termes, avec le hachage LSH des descripteurs de POI à anneaux concentriques, on arrive à construire en mémoire une base de données ordonnée (tables de hachage) de laquelle on peut dériver d'une part une identification des images à forte similarité graphique et d'autres part une identification des points d'intérêts à forte capacité de discrimination entre les images.

Dans le cas où le spectre des objets postaux traités est homogène (forte ressemblance graphique et textuelle des images) il est bien entendu possible de faire entrer en compte d'autres critères que le simple nombre de POI de mêmes valeurs de hachage entre les deux images.

On peut par exemple établir, pour une collection d'images de référence, une liste de POI discriminants dont les valeurs de hachage respectives ne correspondent à celle d'aucun autre POI d'une image candidate ou à celle d'au plus N POI d'images candidates, N valant par exemple 1, et tester la similarité d'une image cible avec les images de référence en se limitant à une comparaison avec les valeurs de hachage des POI discriminants plutôt qu'en comparant avec l'ensemble total des POI.

Dans l'esprit du procédé DoGS on peut alors individualiser une image correspondante dans un ensemble d'images candidates graphiquement similaires en omettant le fond d'image commun et en ne s'intéressant qu'aux POI constituant les zones potentiellement discriminantes.

Quel que soit le degré de sophistication de l'algorithme d'appariement utilisé pour exploiter les tables de hachage, l'appariement reposant sur le procédé Fast-DoGS ne met en oeuvre que des comparaisons entre des valeurs numériques chacune représentative d'un point de l'image défini comme point d'intérêt POI au cours du procédé, calculs compatibles avec des contraintes d'exploitation en temps réel.

Cet appariement rend donc possible le suivi et le tri en temps réel d'un grand nombre d'objets distincts sans nécessiter d'apposer sur ceux-ci un identificateur comme un code à barres.

Le procédé d'appariement Fast-DoGS selon l'invention trouve un grand nombre d'applications.

A titre d'exemple illustré sur la figure 1, des paquets PPI 110 à trier sont placés sur un convoyeur de tri 120 d'une machine de tri 160 d'un centre logistique puis sont photographiés au moyen d'appareils C1 de prises de vue numérique de manière à obtenir des premières images numériques des paquets à trier en partie amont du convoyeur de tri, de préférence un seul paquet par image numérique.

Ces paquets à trier peuvent arriver par exemple à un centre de tri postal en vue de leur redistribution vers des adresses de destination. Ils comportent donc des informations de distributions telles des adresses comprenant des caractères de texte.

A ces premières images numériques, qui serviront d'images de référence, l'unité 150 de traitement de données qui peut être considérée globalement comme l'unité de contrôle/commande de la machine de tri 160 va associer des descripteurs locaux puis des valeurs de hachage numériques rangées dans des tables de hachage selon le procédé 300 décrit ci-dessus. Les informations d'adresse sont reconnues automatiquement par l'unité 150 à partir des images et les adresses reconnues constituant des données de tri peuvent être également stockées en mémoire 140 en association avec les images de référence.

Dans un deuxième temps, en aval des appareils C1, les paquets sont orientés dans des sorties de tri indiquées par la flèche F1, où ils peuvent encore faire l'objet d'une seconde prise d'image au moyen d'appareils C2 de prise de vue numérique.

Donc pour chaque paquet en entrée du convoyeur 120, on acquiert et on enregistre en mémoire de l'unité 150 une seconde image numérique de c paquet qui constitue l'image cible que l'on souhaite apparier à l'une des images de référence, afin de procéder à un suivi de contrôle de ce paquet tout le long de la chaîne de traitement logistique du paquet pour diriger ce paquet vers une sortie de tri.

Comme pour les premières images numériques, l'unité 150 de traitement de données associe à la seconde image numérique des descripteurs locaux 190 puis des valeurs de hachage numériques 250 rangées dans des tables de hachage 350 selon le procédé Fast-DoGS.

En variante, le paquet en sortie de tri peut également revenir en entrée du convoyeur de tri 20 suivant la flèche F2 de sorte qu'une seconde image du paquet est également acquise par le moyen de prise de vue C1.

Aux fins de traitement des paquets, les premières images numériques, la seconde image numérique de chaque paquet et les descripteurs locaux et valeur ou clef numérique de hachage associés sont stockés en mémoire 140 de l'unité de traitement de données 150.

L'unité 150 apparie comme expliqué plus haut la seconde image de chaque paquet à celle des premières images ayant le plus de valeurs de hachage rangées dans les mêmes buckets que ceux dans lesquels les valeurs de hachage de la seconde image sont rangées pour récupérer par exemple les informations d'adresse postale du paquet de sorte à assurer son traitement logistique dans la machine de tri 160.

On pourra comprendre qu'il est également possible que l'issue du processus aboutisse à apparier la seconde image à plusieurs des premières images de référence et dans ce cas affiner la décision par un appariement DoGS classique ou autre, ou encore avoir recours à un vidéo-codage par un Opérateur humain par exemple en affichant sur un écran de l'Opérateur de vidéo-codage ces premières images de référence et l'image cible afin de laisser à cet Opérateur humain le contrôle de la dernière phase de l'appariement.

Le procédé Fast-DoGS selon l'invention est adapté à l'appariement structurel d'images d'objets postaux tels que lettres, objets postaux plats, colis, paquets y compris PPI.

Dans la procédé DoGS le taux de POI appariés avec ceux d'une image cible est rapporté, soit au nombre $POI_{tot}$ total de POI de l'image cible, soit au sous-ensemble $POI_{dis}$ de POI considérés comme étant discriminants au sein du contexte de recherche.

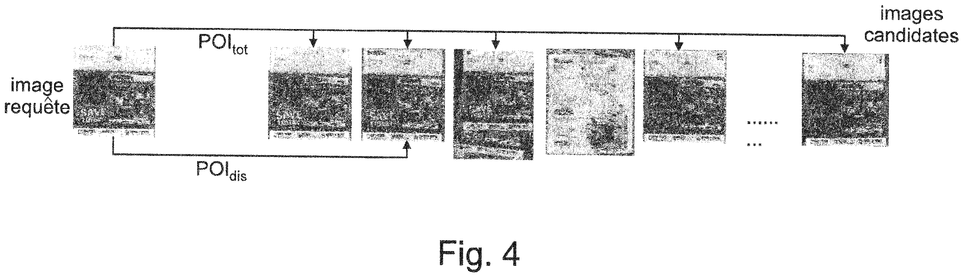

L'ensemble $POI_{tot}$ est utile à la sélection dite structurelle des objets postaux qui partagent des structures graphiques et textuelles avec l'image cible (cas du fond d'image pour les magazines illustré sur la figure 4).

Le sous-ensemble $POI_{dis}$ est quant à lui utile à l'individualisation de l'image correspondant à celle de l'objet requête au sein de la famille structurelle.

L'état de POI discriminant est donc relatif à un contexte de recherche. Un POI de l'image cible est considéré discriminant s'il n'a pas été apparié (par défaut) ou s'il n'a été apparié que sur au plus N candidats (N=1 classiquement). On en déduit a contrario que la mise en correspondance d'un POI sur plusieurs candidats est significative de l'appartenance de ce POI à une structure locale commune à toute la famille d'objets ou non discriminante entre plusieurs objets de cette famille.

Cette différenciation entre $POI_{dis}$ et $POI_{tot}$ peut être prise en compte dans le procédé Fast-DoGS par analyse de la matrice dite de collision des POI illustrée par les tableaux ci-dessous.

Ainsi, suite au hachage des DoGS des P points d'intérêt POI sélectionnés de l'image cible suivant les L familles LSH considérées lors de la génération des L tables, il est possible de prendre en compte, pour chaque POI p recherché, le nombre d'images candidates en collision dans un bucket et ce, avec ou sans accumulation sur les L tables de hachage suivant l'algorithme ci-dessous :

$$\rightarrow \text{ initialisation de la matrice } \texttt{M}_{\texttt{coll}}\texttt{(p,i)} \text{ avec p=[1,P]}$$

$$\text{et P i=[1,N] images candidates}$$

$$\circlearrowleft \text{ pour chaque POI p de l'image requête}$$

$$\rightarrow \text{ calcul des L hash } h_p^1, \ h_p^2, ..., \ h_p^L$$

$$\circlearrowleft \text{ pour chaque table l}$$

$$\rightarrow \text{ incrémentation} \quad M_{coll}[p,i] = M_{coll}[p,i] + 1 \text{ de}$$

$$\text{chaque i} \subset h_p^l$$

Comme illustré ci-dessus, la somme des collisions des POI cumulées par candidat image en contexte (somme par colonne de $M_{coll}$) fournit le signal $POI_{tot}$ dont l'amplitude des échantillons traduit l'appartenance du candidat à la famille structurelle de l'image cible.

Un POI est fixé à l'état discriminant s'il n'est pas apparié avec plus d'un candidat du contexte, l'appariement avec un candidat étant effectif si le nombre de collision est supérieur à L/2 pour la matrice avec accumulation sur L tables et si le nombre de collision est non nul pour la matrice sans accumulation sur les L tables. Le signal $POI_{dis}$, traduit quant à lui le nombre de collisions, par candidat, des POI discriminants de l'image requête.

Le procédé Fast-DoGS selon l'invention peut avantageusement s'appliquer au filtrage structurel. Dans ce mode applicatif on dispose d'une image cible d'un objet postal et d'un ensemble d'individus images constituant l'espace de référence. On cherche à extraire de ce contexte de recherche le sous-ensemble minimal d'individus qui présentent une similarité structurelle maximale avec l'individu cible.

Le signal $POI_{tot}$ issu de la matrice des collisions en contexte des POI de l'image cible est représentatif de l'accumulation statistique des structures de luminances communes parmi les candidats.

Divers algorithmes classiques peuvent être utilisés pour trouver le seuil optimal de coupure des amplitudes du signal, avec une efficacité qui va dépendre du spectre d'objets considéré (objets plats petit ou grand format, PPI, paquets, population fortement homogène ou non).

Si ce procédé de filtrage structurel d'objets postaux peut permettre d'initier un processus d'appariement d'individu sur bases d'images massives par présélection structurelle des candidats, il peut sur un spectre d'objets postaux fortement hétérogènes, individualiser directement l'image cible en contexte. Par exemple, on peut avoir un appariement $POI_{tot}$ d'un objet de type carte postale sur un horizon de plusieurs dizaines à plusieurs centaines de milliers d'objets plats format lettre.

Le procédé Fast-GoGS selon l'invention peut encore s'appliquer à la clusterisation structurelle. Dans ce mode applicatif on dispose d'un ensemble d'images de référence que l'on cherche à répartir en groupes d'individus partageant des caractéristiques graphiques et textuelles communes. On doit ainsi maximiser la similarité structurelle entre les individus d'un même groupe et minimiser la similarité entre les groupes. Les contraintes de la clusterisation dépendent du critère d'homogénéité des partitions (groupes d'individus) et de l'applicatif : privilégier plutôt un « sur-clustering » ou un « sous clustering ».

Tout comme le filtrage structurel, le partitionnement préalable des individus formant l'horizon de recherche maximal peut constituer la première phase d'une problématique d'appariement pour accélération et optimisation de la seconde phase d'individualisation : présélectionner les clusters les plus proches de l'individu image cible par mesure de similarité avec les individus référents des groupes.

Quel que soit l'algorithme utilisé pour le clustering, il peut être nécessaire de disposer d'une métrique de comparaison entre les individus (distance).

Le hachage LSH des DoGS des POI sélectionnés sur chaque individu image permet de construire rapidement la matrice de similarité qui exprime la proximité structurelle entre chacun des individus de l'espace de référence. En effet la collision statistique des POI des images par regroupement en buckets se prête naturellement à la confection d'une telle matrice.

Les valeurs de similarité de la matrice peuvent, par exemple, servir de base à une procédure de classification hiérarchique ascendante qui consiste à effectuer une fusion progressive des clusters par coût de similarité décroissante (coût itératif de la partition) et permet l'obtention d'un dendogramme. La coupure de ce dendogramme peut dépendre du nombre maximal de partitions souhaitées ou d'un seuil d'homogénéité intra-cluster.

Le procédé Fast-DoGS selon l'invention peut encore s'appliquer avantageusement à la génération d'hypothèses de reconnaissance. Dans ce mode applicatif on dispose d'une image cible d'un objet postal et d'un horizon de recherche de N images candidates suffisamment large pour qu'il compromette l'utilisation d'une méthodologie classique : grand horizon à traiter en temps-réel ou horizon massif de plusieurs dizaines de milliers à plusieurs millions d'images.

En supposant que l'objet recherché possède une image correspondante dans l'horizon de recherche, l'objectif est d'obtenir les H minimum meilleures hypothèses de reconnaissance de l'image cible incluant la bonne solution.

Les H hypothèses de reconnaissance d'images (HRI) sont alors susceptibles d'entrer dans un processus de décision automatique (prise en compte de la fiabilité absolue et relative des hypothèses scorées ou application d'un autre critère de discrimination) ou supervisé (validation par un opérateur humain comme dans le cas de l'aide au tri manuel "CAMS")

Le procédé utilisé pour la génération de HRI, combine l'ensemble des processus suivants :

- Génération des tables de hachage LSH DoGS

  - > Extraction des POI sur les N images et calcul de leurs descripteurs DoGS
  - > Fixation de la configuration de hachage LSH : précision K-bits et nombre L de tables
  - > Création des L familles de fonctions de hachage LSH similarité cosinus
  - > Fixation du mode de sélection des POI (sélective ou non)
  - > Hachage LSH DoGS et remplissage des L tables, au fil de l'eau ou en temps différé

- Appariement structurel de l'image

  - > Extraction des POI sur l'image cible et calcul de leurs descripteurs DoGS
  - > Fixation du mode de sélection des POI (si extraction originelle non sélective ou non)
  - > Hachage DoGS suivant les L familles LSH et construction de la matrice de collision $M_{coll}$

- > Calcul du signal POI$_{tot}$ représentatif des similarités structurelles globales des N candidats
- > Seuillage conditionnel du signal POI$_{tot}$ pour filtrage structurel des N'<N candidats
- > Identification des POI discriminants dans le contexte des N ou N' candidats
- > Tri des hypothèses suivant les collisions POI$_{tot}$ avec ou sans accumulation sur les L tables
- > Tri des hypothèses suivant les collisions POI$_{dis}$ avec ou sans accumulation sur les L tables
- > Génération des H meilleures hypothèses par combinaison POI$_{tot}$/POI$_{dis}$ avec ou sans accumulation des collisions sur les tables de hachage.

Le filtrage POI$_{tot}$ pour la présélection des N' candidats structurellement proches de l'image cible peut être déclenché de manière conditionnelle par analyse automatique du signal POI$_{tot}$ (courbure, modes de l'histogramme, ...).

Comme déjà présenté plus haut, les performances d'appariement du procédé Fast-DoGS peuvent bénéficier d'une amélioration du rappel, par débordement de la recherche du hash DoGS h sur les 32 hashes h' tels que la distance de Hamming entre h et h' soit égale à 1 et ce, sans risque important d'augmentation du nombre de faux positifs si l'on considère l'accumulation des collisions sur les L tables de hachage.

## Revendications

1. Procédé pour trier des articles (110) tels que des articles de courrier postal, des colis ou des paquets en machine (160), dans lequel des premières images numériques des articles sont formées (302) au moyen de premiers appareils (C1) de prises de vue numérique et des informations de tri sont reconnues automatiquement à partir des premières images et sont enregistrées en mémoire en association avec lesdites premières images dans une unité de traitement de données (150) de la machine, et dans lequel une seconde image numérique de chaque article est formée dans un deuxième temps, au moyen de seconds appareils (C2) de prise de vue situés en aval des premiers appareils (C1), et est appariée par l'unité de traitement avec une des premières images par évaluation d'une similarité graphique entre ces deux images numériques pour récupérer automatiquement par association en mémoire lesdites informations de tri, et comprenant les étapes suivantes de traitement de données :

    a) transformation de chacune des premières images numérique et de la seconde image numérique d'un article en une carte topographique de divergence locale du champ vectoriel de gradient de luminance,
    b) détection, à partir de ladite carte topographique, de singularités ou extrema de divergence locale du champ vectoriel de gradient de luminance, ces singularités correspondant à des points d'intérêt (POI) dans ladite image numérique,
    c) pour chaque point d'intérêt (POI), encodage des valeurs de singularité correspondantes qui sont localisées sur des anneaux centrés sur le point d'intérêt dans la carte topographique, pour dériver un descripteur de singularité local du champ de gradient centré-réduit (DoGs) associé audit point d'intérêt (POI), comprenant :

        - l'encodage (310) des valeurs de singularité du champs de gradient sous la forme d'un vecteur de données numériques (192) à plusieurs composantes associées respectivement à plusieurs anneaux concentriques centrés sur ledit point d'intérêt, chaque composante du vecteur de données numériques associée à un anneau étant dérivée d'un calcul (318,319) de la somme de valeurs de singularité du champ vectoriel de l'anneau considéré, et la transformation (320,322,324) dudit vecteur de données (192) en au moins une clef de hachage numérique (250) au moyen d'une famille de fonctions de hachage de type LSH Cosinus, et
        - le rangement dans au moins une table de hachage (350) en mémoire (140) dans l'unité (150), desdites clefs de hachage (250) représentatives des descripteurs de singularités locaux (DoGs) des points d'intérêts (POI) associés aux premières images numériques des articles et à la seconde image,

    d) et comparaison desdits descripteurs de singularité (DoGs) associés à la seconde image à ceux associés à une des premières images, pour évaluer ladite similarité graphique entre ces deux images numériques, comprenant :

        - la recherche dans l'unité (150), à partir de ladite table de hachage (350), d'une des premières images qui a le plus de clefs de hachage en commun avec la seconde image pour évaluer la similarité graphique entre la seconde image et ladite une des premières images.

2. Procédé selon la revendication 1, **caractérisé en ce que** ladite transformation du vecteur de données (192) comprend une multiplication du vecteur de données par une matrice de hachage (202) représentant les familles de fonctions de hachage de type LSH Cosinus pour produire un second vecteur de données numériques (210) à composantes signées positives ou négatives, une transformation de chaque composante du second vecteur de données numériques (210) en une valeur binaire pour produire un troisième vecteur de valeurs binaires (220) et un calcul d'une valeur numérique de clef de hachage qui correspond à une conversion de l'expression binaire représentée par le troisième vecteur (220).

3. Procédé selon la revendication 1 ou 2, **caractérisé en ce que** les articles sont des objets postaux sur chacun desquels est apposée une information d'adresse postale de distribution comprenant des symboles et des caractères d'écriture et **en ce que** les anneaux concentriques centrés sur le point d'intérêt (POI) sont inscrits dans un disque de singularité de 8mm de rayon pour une résolution d'image de 4 pixels/mm et **en ce que** le vecteur de données numériques associées aux anneaux centrés sur le point d'intérêt est un vecteur à 32 composantes pour 32 anneaux.

4. Procédé selon la revendication 3, **caractérisé en ce que** chaque fonction formant une famille de hachage est un vecteur de données à 32 composantes choisies chacune aléatoirement et indépendamment parmi les valeurs +1 et - 1.

5. Procédé selon la revendication 4, **caractérisé en ce que** chaque famille de hachage est une matrice de hachage formée par la concaténation de K fonctions de hachage représentée chacune par un vecteur de données.

6. Procédé selon la revendication 5, **caractérisé en ce que** K est choisi entre 16 et 64.

7. Procédé selon la revendication 6, **caractérisé en ce que** on calcule L clefs numériques de hachage pour le descripteur de singularités à partir de L familles de fonctions de hachage avec L choisi entre 4 et 8.

8. Procédé selon la revendication 7, **caractérisé en ce que** on calcule une matrice de collision des points d'intérêt à partir des clefs de hachage.

9. Procédé selon la revendication 8, **caractérisé en ce que** on réalise un filtrage structurel de l'horizon de recherche et à partir de cette matrice de collision.

10. Procédé selon la revendication 8, **caractérisé en ce que** on réalise une clusterisation structurelle de l'horizon de recherche à partir de la matrice de collision.

11. Procédé selon la revendication 10, **caractérisé en ce que** on réalise une génération d'hypothèses de reconnaissance d'images à partir des tables de hachage.

12. Machine de tri postal, **caractérisée en ce qu'**elle comprend une unité de contrôle/commande (150) agencée spécialement pour mettre en oeuvre le procédé de tri selon l'une des revendications 1 à 11.

**Patentansprüche**

1. Verfahren zum Sortieren von Artikeln (110) wie zum Beispiel Postartikeln, Paketen oder Päckchen in einer Maschine (160), wobei erste digitale Bilder der Artikel mittels erster digitaler Bildaufnahmeeinrichtungen (C1) ausgebildet werden (302) und Sortierinformationen aus ersten Bildern automatisch erkannt werden und in Verknüpfung mit den ersten Bildern in einer Datenverarbeitungseinheit (150) der Maschine in einem Speicher gespeichert werden, und wobei ein zweites digitales Bild jedes Artikels in einer zweiten Phase ausgebildet wird, mittels zweiter Bildaufnahmeeinrichtungen (C2), die stromabwärts der ersten Einrichtungen (C1) gelegen sind, und durch die Verarbeitungseinheit mit einem der ersten Bilder durch Auswertung einer grafischen Ähnlichkeit zwischen diesen zwei digitalen Bildern zum automatischen Abrufen durch die Verknüpfung in dem Speicher der Sortierinformationen gepaart wird, und umfassend die folgenden Datenverarbeitungsschritte:

a) Umwandeln jeweils der ersten digitalen Bilder und des zweiten digitalen Bildes eines Artikels in eine topografische Karte einer lokalen Divergenz des Luminanzgradientenvektorfeldes,
b) Erfassen, aus der topografischen Karte, von Singularitäten oder Extrema der lokalen Divergenz des Luminanzgradientenvektorfeldes, wobei diese Singularitäten Punkten von Interesse (POI) in dem digitalen Bild entsprechen,
c) für jeden Punkt von Interesse (POI), Codieren von entsprechenden Singularitätswerten, die auf Ringen lokalisiert sind, die auf den Punkt von Interesse in der topografischen Karte zentriert sind, zum Ableiten eines lokalen Singularitätsdeskriptors des zentriert-reduzierten Gradientenfeldes (DoGs), das mit dem Punkt von Interesse (POI) verknüpft ist, umfassend:

- Codieren (310) der Singularitätswerte des Gradientenfeldes in Form eines Vektors (192) von digitalen Daten mit mehreren Komponenten, die jeweils mit mehreren konzentrischen Ringen verknüpft sind, die auf den Punkt von Interesse zentriert sind, wobei jede Komponente des Vektors von digitalen Daten mit einem Ring verknüpft ist, der von einem Berechnen (318, 319) der Summe von Singularitätswerten des Vektorfeldes des berücksichtigten Rings abgeleitet ist, und Umwandeln (320, 322, 324) des Datenvektors (192) in mindestens einen digitalen Hash-Schlüssel (250) mittels einer Familie von Hash-Funktionen der Art LSH Cosinus, und

- Ordnen, in mindestens einer Hash-Tabelle (350) in dem Speicher (140) in der Einheit (150), der Hash-Schlüssel (250), die die lokalen Singularitätsdeskriptoren (DoGs) der Punkte von Interesse (POI) darstellen, die mit den ersten digitalen Bildern der Artikel und mit dem zweiten Bild verknüpft sind,

d) und Vergleichen der Singularitätsdeskriptoren (DoGs), die mit dem zweiten Bild verknüpft sind, mit diesen, die mit einem der ersten Bilder verknüpft sind, zum Auswerten der grafischen Ähnlichkeit zwischen diesen zwei digitalen Bildern, umfassend:

- Suchen in der Einheit (150), aus der Hash-Tabelle (350), eines der ersten Bilder, das die meisten Hash-Schlüssel mit dem zweiten Bild gemeinsam hat, zum Auswerten der grafischen Ähnlichkeit zwischen dem zweiten Bild und einem der ersten Bilder.

2. Verfahren nach Anspruch 1, **dadurch gekennzeichnet, dass** das Umwandeln des Datenvektors (192) eine Multiplikation des Datenvektors mit einer Hash-Matrix (202), die die Familien von Hash-Funktionen der Art LSH Cosinus darstellt, zum Produzieren eines zweiten Vektors (210) von digitalen Daten mit positiven oder negativen signierten Komponenten, ein Umwandeln jeder Komponente des zweiten Vektors (210) von digitalen Daten in einen binären Wert zum Produzieren eines dritten Vektors (220) von binären Werten und ein Berechnen eines digitalen Werts des Hash-Schlüssels umfasst, der einem Konvertieren des binären Ausdrucks entspricht, der durch den dritten Vektor (220) dargestellt wird.

3. Verfahren nach Anspruch 1 oder 2, **dadurch gekennzeichnet, dass** die Artikel Postobjekte sind, wobei auf jedem davon Postadresseninformationen für eine Zustellung angebracht sind, umfassend Symbole und Schriftzeichen, und dass die konzentrischen Ringe, die auf den Punkt von Interesse (POI) zentriert sind, in eine Singularitätsplatte mit einem Radius von 8 mm für eine Bildauflösung von 4 Pixeln/mm aufgenommen sind und dass der Vektor von digitalen Daten, die mit den Ringen verknüpft sind, die auf den Punkt von Interesse zentriert sind, ein Vektor mit 32 Komponenten für 32 Ringe ist.

4. Verfahren nach Anspruch 3, **dadurch gekennzeichnet, dass** jede Funktion, die eine Hash-Familie ausbildet, ein Datenvektor mit 32 Komponenten ist, die jeweils zufällig und unabhängig aus den Werten +1 und -1 ausgewählt werden.

5. Verfahren nach Anspruch 4, **dadurch gekennzeichnet, dass** jede Hash-Familie eine Hash-Matrix ist, die durch die Verkettung von K Hash-Funktionen ausgebildet wird, die jeweils durch einen Datenvektor dargestellt wird.

6. Verfahren nach Anspruch 5, **dadurch gekennzeichnet, dass** K zwischen 16 und 64 ausgewählt wird.

7. Verfahren nach Anspruch 6, **dadurch gekennzeichnet, dass** L digitale Hash-Schlüssel für den Singularitätsdeskriptor aus L Familien von Hash-Funktionen berechnet werden, wobei L zwischen 4 und 8 ausgewählt wird.

8. Verfahren nach Anspruch 7, **dadurch gekennzeichnet, dass** eine Kollisionsmatrix der Punkte von Interesse aus Hash-Schlüsseln berechnet wird.

9. Verfahren nach Anspruch 8, **dadurch gekennzeichnet, dass** ein strukturelle Filterung des Suchhorizonts und aus dieser Kollisionsmatrix durchgeführt wird.

10. Verfahren nach Anspruch 8, **dadurch gekennzeichnet, dass** ein strukturelles Clustering des Suchhorizonts aus der Kollisionsmatrix durchgeführt wird.

**11.** Verfahren nach Anspruch 10, **dadurch gekennzeichnet, dass** eine Erzeugung von Bilderkennungshypothesen aus Hash-Tabellen durchgeführt wird.

**12.** Postsortiermaschine, **dadurch gekennzeichnet, dass** sie eine Steuerungs-/Befehlseinheit (150) umfasst, die speziell zum Implementieren des Sortierverfahrens nach einem der Ansprüche 1 bis 11 eingerichtet ist.

**Claims**

**1.** A method for sorting items (110) such as postal items, parcels or packets in machine (160), wherein first digital images of the items are formed (302) by means of first digital image capturing apparatuses (C1) and sorting information is automatically recognized from the first images and is recorded in a memory in association with the first images in a data processing unit (150) of the machine, and wherein a second digital image of each item is formed in a second step by means of second image capturing apparatuses (C2), which are downstream of the first apparatuses (C1), and is matched by the processing unit with one of the first images by evaluating a graphic similarity between these two digital images in order to automatically recover the sorting information by association in the memory, the method comprising the following data processing steps:

a) transforming each of the first digital images and the second digital image of an item into a topographic map of local divergence in the luminance gradient vector field,
b) detecting, on the basis of the topographic map, singularities or extrema of local divergence in the luminance gradient vector field, these singularities corresponding to points of interest (POI) in the digital image,
c) for each point of interest (POI), encoding corresponding singularity values which are located on rings centered on the point of interest in the topographic map in order to derive a local singularity descriptor of the centered-reduced gradient field (DoGs) associated with the point of interest (POI), comprising:

- encoding (310) the singularity values of the gradient field in the form of a digital data vector (192) having a plurality of components which are each associated with a plurality of concentric rings centered on the point of interest, each component of the digital data vector associated with a ring being derived from a calculation (318, 319) of the sum of singularity values of the vector field of the ring in question, and transforming (320, 322, 324) the data vector (192) into at least one digital hash key (250) by means of a family of cosine LSH hash functions, and
- storing the hash keys (250) which are representative of the local singularity descriptors (DoGs) of the points of interest (POI) associated with the first digital images of the items and with the second image in at least one hash table (350) in the memory (140) in the unit (150),

d) and comparing the singularity descriptors (DoGs) associated with the second image with those associated with one of the first images in order to evaluate the graphic similarity between these two digital images, comprising:

- searching in the unit (150), on the basis of the hash table (350), for one of the first images which has the most hash keys in common with the second image in order to evaluate the graphic similarity between the second image and this one of the first images.

**2.** The method according to claim 1, **characterized in that** transforming the data vector (192) comprises multiplying the data vector by a hash matrix (202) which represents the families of cosine LSH hash functions in order to produce a second digital data vector (210) having positive or negative signed components, transforming each component of the second digital data vector (210) into a binary value in order to produce a third binary value vector (220), and calculating a digital hash key value which corresponds to a conversion of the binary expression represented by the third vector (220).

**3.** The method according to either claim 1 or claim 2, **characterized in that** the items are postal objects, on each of which a piece of distribution postal address information comprising symbols and writing characters is affixed, and **in that** the concentric rings centered on the point of interest (POI) are inscribed in a singularity disk having an 8 mm radius for an image resolution of 4 pixels/mm, and **in that** the digital data vector associated with the rings centered on the point of interest is a vector having 32 components for 32 rings.

**4.** The method according to claim 3, **characterized in that** each function which forms a hash family is a data vector having 32 components which are each selected randomly and independently from the values +1 and -1.

5. The method according to claim 4, **characterized in that** each hash family is a hash matrix which is formed by concatenating K hash functions which are each represented by a data vector.

6. The method according to claim 5, **characterized in that** K is selected from between 16 and 64.

7. The method according to claim 6, **characterized in that** L digital hash keys are calculated for the singularity descriptor from L hash function families, where L is selected from between 4 and 8.

8. The method according to claim 7, **characterized in that** a collision matrix of the points of interest is calculated on the basis of the hash keys.

9. The method according to claim 8, **characterized in that** the search horizon is structurally filtered on the basis of this collision matrix.

10. The method according to claim 8, **characterized in that** the search horizon is structurally clustered on the basis of the collision matrix.

11. The method according to claim 10, **characterized in that** image recognition hypotheses are generated on the basis of the hash tables.

12. A postal sorting machine, **characterized in that** it comprises a monitoring/control unit (150) which is arranged especially to carry out the sorting method according to any of claims 1 to 11.

Fig. 1A

Fig. 1B

EP 3 903 230 B1

Fig. 2A

Fig. 2B

EP 3 903 230 B1

B | I

| B1 | I1 | I43 | I89 | I264 | | |
| B2 | I1 | I89 | I305 | I264 | | |
| B3 | I1 | I166 | I304 | I408 | I510 | |
| B4 | I1 | | | | | |
| B5 | I1 | I3 | | | | |
| B6 | I1 | I3 | I215 | I312 | I543 | I566 |
| B7 | I1 | I4 | I209 | | | |

⋮

| B856 | I566 | I567 |
| B857 | I567 | |
| B858 | I567 | |

Fig. 3A

302
312
314
316
318
319
322
324
332
334
336
342
344
346

310
320
330
340

Fig. 3B

20

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3037691

- EP 1866105 B1